# EUROPÄISCHE PATENTSCHRIFT

(11) **EP 3 468 743 B1**
(45) Veröffentlichungstag und Bekanntmachung des Hinweises auf die Patenterteilung: **08.09.2021**
(21) Anmeldenummer: 18709541.9
(22) Anmeldetag: 06.03.2018
(51) Int. Cl.: B23Q 3/157, B23Q 39/04

(54) **WERKZEUGMASCHINE MIT ZWEI WERKZEUGSPINDELN**
MACHINE TOOL WITH TWO SPINDLES
MACHINE-OUTIL AVEC DEUX BROCHES A OUTILS

(30) Priorität: 20.03.2017 DE 102017105933
(43) Veröffentlichungstag der Anmeldung: 17.04.2019
(73) Patentinhaber: CHIRON Group SE, 78532 Tuttlingen (DE)
(72) Erfinder: SAEUFFERER, Andreas, 73066 Uhingen (DE); BOEHM, Thomas, 73054 Eislingen (DE); SPACHTHOLZ, Guido, 70372 Stuttgart (DE); MUELLER, Frank, 70188 Stuttgart (DE)
(74) Vertreter: Witte, Weller & Partner Patentanwälte mbB
(86) Internationale Anmeldenummer: PCT/EP2018/055441
(87) Internationale Veröffentlichungsnummer: WO 2018/172061

(56) Entgegenhaltungen:
- EP-A1- 2 392 439
- EP-A2- 1 240 974
- IT-A1- RM20 100 138

## Beschreibung

Die vorliegende Erfindung betrifft eine Werkzeugmaschine mit zwei vertikal ausgerichteten, zur Aufnahme von Werkzeugen ausgerüsteten Werkzeugspindeln, die in einer ersten Richtung vertikal und in einer zu der ersten Richtung orthogonalen zweiten Richtung horizontal verfahrbar sind, und mit zwei Vorrichtungen zum Einspannen von zu bearbeitenden Werkstücken, wobei zumindest eine der Vorrichtungen in einer dritten, zu der ersten und der zweiten Richtung orthogonalen Richtung horizontal verfahrbar ist.

Eine derartige Werkzeugmaschine ist aus der EP 1 834 719 A1 der Anmelderin bekannt.

Die bekannte Werkzeugmaschine umfasst zwei nebeneinander angeordnete Maschinengestelle, die miteinander verbunden sind. Jedes Maschinengestell enthält einen eigenen Arbeitsraum, in dem eine Werkzeugspindel in drei orthogonalen Richtungen mithilfe eines Fahrständers verfahrbar ist. Die EP 1 834 719 A1 erwähnt, dass die bekannte Werkzeugmaschine auch mit einem gemeinsamen Grundgestellt ausgestattet sein kann, ohne dies näher zu beschreiben.

Die beiden Arbeitsräume sind von einem Gehäuse umgeben, wobei in der Rückwand eines jeden Arbeitsraumes eine Öffnung vorgesehen ist, durch die ein Werkzeugwechselmagazin in den Arbeitsraum hineinragt, wo es von der jeweiligen Werkzeugspindel zum Werkzeugwechsel nach dem Pick-up-Verfahren angefahren werden kann.

In dem ersten Arbeitsraum ist eine Vorrichtung zum Einspannen von zu bearbeiteten Werkstücken vorgesehen, die um eine horizontale Achse schwenkbar ist.

Ferner ist eine zweite Vorrichtung vorgesehen, die zwischen dem ersten und dem zweiten Arbeitsraum hin- und hergefahren werden kann, und in dem ersten Arbeitsraum ein teilbearbeitetes Werkstück übernimmt, das nach dem Verfahren der zweiten Vorrichtung in den zweiten Arbeitsraum dort fertig bearbeitet werden kann.

Auf diese Weise ist es beispielsweise möglich, ein Werkstück von einer Stange in dem ersten Arbeitsraum an fünf Seiten zu bearbeiten, das Werkstück dann in die zweite Vorrichtung zu übergeben und von der Stange abzuschneiden, woraufhin dann die zweite Vorrichtung in den zweiten Arbeitsraum verfährt, wo die sechste Seite des Werkstückes bearbeitet werden kann.

Obwohl diese Werkzeugmaschine für die meisten Anwendungsfälle alle Anforderungen mehr als erfüllt, ist sie für bestimmte Anwendungen ggf. nicht steif und kompakt genug, wobei auch die gesamte Bearbeitungsgeschwindigkeit insbesondere für komplexe Werkstücke noch optimiert werden kann.

Aus der EP 2 777 872 A1 ist ein vertikales Bearbeitungszentrum in Gantry-Bauform bekannt, bei dem ein Maschinengestell in Form eines liegenden U einen Arbeitsraum umgreift, in dem eine Vorrichtung zum Einspannen von zu bearbeitenden Werkstücken um eine horizontale Achse schwenkbar gelagert ist. Auf den Seitenwänden des U-förmigen Maschinengestells ist die vertikale Werkzeugspindel gelagert.

Innerhalb des Maschinengestells ist ein Werkzeugmagazin in Kreisform angeordnet, an dem die Werkzeugspindel in Pick-up-Verfahren Werkzeuge wechseln kann.

Unterhalb des Werkzeugmagazins ist ein identisches Werkzeugmagazin vorgesehen, in dem weitere Werkzeuge vorrätig gehalten werden, die mithilfe einer an einer Öffnung des Maschinengestells angeordneten Umladevorrichtung zwischen den beiden Werkzeugmagazinen umgeladen werden können.

Das bekannte Bearbeitungszentrum ermöglicht die Bearbeitung vielfältiger Werkstücke mit einer großen Anzahl von Werkzeugen, wobei das Werkstück jedoch nur in einer Aufspannung bearbeitet werden kann.

Bei diesem Bearbeitungszentrum ist von Nachteil, dass viele Werkstücke innerhalb des Bearbeitungszentrums nicht fertig bearbeitet werden können.

Aus der EP 2 392 439 A1, die die Basis für den Oberbegriff des beiliegenden Anspruchs 1 bildet, ist eine Werkzeugmaschine mit einem durchgehenden Bett bekannt, auf dem zwei einseitig gehaltene und horizontal längs des Bettes fahrende Balken vorgesehen sind, die jeweils zwei Werkzeugspindel und ein Werkzeugmagazin tragen. Beide Spindeln sind vertikal und längs des Balkens verfahrbar. Auf dem Bett sind mehrere Werkstückträger angeordnet, die von Hand oder automatisch längs des Bettes verfahren werden können. Die beiden Werkzeugspindeln weisen aufeinander zu, so dass sie gemeinsam ein Werkstück oder getrennt verschiedene Werkstücke bearbeiten können.

Die EP 1 240 974 A2 beschreibt zwei horizontal fahrende Portalbalken, die auf zwei Schienen fahren, die über Ständer auf einer gemeinsamen Grundplatte angeordnet sind. Die Portalbalken tragen je eine Werkzeugspindel, die vertikal und längs des Portalbalkens verfahren werden können und aufeinander zu weisen. Die Werkstücke werden jeweils fest auf der Grundplatte befestigt.

Vor diesem Hintergrund liegt der vorliegenden Erfindung die Aufgabe zugrunde, die eingangs erwähnte Werkzeugmaschine derart weiterzubilden, dass bei konstruktiv einfachem Aufbau eine kompakte und steife Werkzeugmaschine geschaffen wird, auf der auch komplexe Werkstücke schnell bearbeitet werden können.

Erfindungsgemäß wird diese Aufgabe gelöst durch eine Werkzeugmaschine mit den Merkmalen des Anspruchs 1.

Unter einem gemeinsamen Arbeitsraum wird im Rahmen der vorliegenden Erfindung der Raum verstanden, in dem die Werkstücke und Werkzeuge bewegt werden. Der Arbeitsraum kann dabei größer sein als der eigentliche Späneraum, in dem die Werkstücke mit den Werkzeugen bearbeitet werden. Die Werkzeugspindeln können z.B. zum Werkstückwechsel aus dem Späneraum herausgefahren werden, der von dem restlichen Arbeitsraum durch Verkleidungswände abgetrennt sein kann.

Die neue Werkzeugmaschine weist den Vorteil auf, dass sich die beiden Werkzeugspindeln sozusagen Kopf an Kopf gegenüberstehen und nicht nebeneinander angeordnet sind, wie dies in der EP 1 834 719 A1 der Fall ist. Dies ermöglicht einen kompakten und steifen Aufbau der neuen Werkzeugmaschine sowie kurze Transportwege innerhalb des Arbeitsraumes, was ein schnelles Durchschleusen der Werkstücke ermöglicht. Ferner ist die neue Werkzeugmaschine aufgrund des gemeinsamen Maschinengestells sehr steif.

Weil erfindungsgemäß nur kurze Wege zwischen den Vorrichtungen und/oder den Werkzeugspindeln zu überwinden sind, können mit der neuen Werkzeugmaschine die Werkstücke daher schnell bearbeitet werden.

Weil die neue Werkzeugmaschine zwei Vorrichtungen zum Einspannen von Werkstücken aufweist, können die Werkstücke zwischen den Vorrichtungen übergeben werden, so dass auch komplexe Werkstücke in der neuen Werkzeugmaschine fertig bearbeitet werden können.

Die Übergabe der Werkstücke von der einen in die andere Vorrichtung kann beispielsweise mithilfe eines in eine der Werkzeugspindeln eingespannten Spindelgreifers erfolgen, wobei in dem Arbeitsraum auch eine Werkstücktransportvorrichtung vorgesehen sein kann.

Alternativ ist es auch möglich, zumindest eine der beiden Vorrichtungen verfahrbar auszugestalten, wie dies aus der eingangs erwähnten EP 1 834 719 A1 bekannt ist, so dass das Werkstück unmittelbar von der ersten in die zweite Vorrichtung übergeben werden kann.

Die Werkzeugmaschine ist wie eine doppelte Portalmaschine ausgestaltet, bei der sich die beiden Portalbalken parallel zueinander erstrecken und zwischen sich die beiden Werkzeugspindeln halten, die parallel zu den Portalbalken und senkrecht zu den Portalbalken verfahrbar sind.

Dies führt zu einer sehr steifen Werkzeugmaschine, die zudem sehr kompakt aufgebaut ist.

Weil das Maschinengestell eine Grundplatte und zwei Stirnwände aufweist, an deren oberen Enden jeweils einer der Portalbalken ausgebildet ist, wird ein sehr steifes Maschinengestell geschaffen, das auch bei hohen Verfahrgeschwindigkeiten der Werkzeugspindeln noch eine sehr genaue und reproduzierbare Bearbeitung der Werkstücke ermöglicht. Auch dies trägt zur Bearbeitungsgeschwindigkeit der neuen Werkzeugmaschine bei

Aus der zweiten Richtung gesehen, also in der durch die erste und die dritten Richtung aufgespannten Ebene, ist das Maschinengestell U-förmig mit aufeinander zu weisenden Portalbalken ausgebildet, die in Richtung des Arbeitsraumes, also in der dritten Richtung gesehen sich bis vor die Stirnwände erstrecken, so dass die Seitenwände oben sozusagen einen Haken bilden.

Weiter ist von Vorteil, dass durch Verfahren zumindest einer der beiden Vorrichtungen ein in der ersten Vorrichtung teilbearbeitetes Werkstück an die zweite Vorrichtung übergeben werden kann, die dann nur einen sehr kurzen Weg zurücklegen muss, um dieses teilbearbeitete Werkstück der zweiten Werkzeugspindel zur Endbearbeitung, vorzugsweise an der sechsten Seite, zu präsentieren.

Bei der neuen Werkzeugmaschine ist weiter von Vorteil, dass nur zwei Verfahrrichtungen in der Werkzeugspindel realisiert sind, während die dritte Verfahrrichtung in der jeweiligen Vorrichtung realisiert ist. Auch dies führt zu einer sehr steifen Werkzeugmaschine, denn bei den Werkzeugspindeln werden Kippmomente weitgehend vermieden. Dies kommt auch der Genauigkeit und Geschwindigkeit der Bearbeitung zugute.

Wegen der kurzen Verfahrwege und der direkten Übergabe des teilbearbeiteten Werkstückes von der ersten an die zweite Vorrichtung ist die gesamte Bearbeitungszeit eines Werkstückes sehr gering.

Weiter ist von Vorteil, dass jederzeit ein Werkzeugwechsel nach den Pick-up-Verfahren möglich ist, es ist nicht erforderlich, dass das Werkzeugwechselmagazin dazu zunächst in den Arbeitsraum hineingefahren wird. Auch dies sorgt für eine geringe Gesamtbearbeitungszeit eines Werkstückes. Zu dem Werkzeugwechsel fährt die betreffende Werkzeugspindel ggf. aus dem Späneraum heraus, wozu ggf. eine Tür in der Verkleidungswand geöffnet wird, die das innere Ende des Werkzeugwechselmagazins von dem Späneraum abtrennt

Die der Erfindung zugrundeliegende Aufgabe wird auf diese Weise vollkommen gelöst

Dabei ist es bevorzugt, wenn zumindest eine der beiden Vorrichtungen eine Schwenkachse aufweist, die sich vorzugsweise in der zweiten Richtung erstreckt.

Hier ist von Vorteil, dass ein in diese Vorrichtung eingespanntes Werkstück an allen Seiten und Oberflächenbereichen, die nicht in die Vorrichtung eingespannt sind, bearbeitet werden kann. Dies ermöglicht eine vollständige schnelle Bearbeitung eines Werkstückes in der neuen Werkzeugmaschine.

Insgesamt ist es bevorzugt, wenn für jede Werkzeugspindel ein Werkzeugwechselmagazin vorgesehen ist.

Hier ist von Vorteil, dass mehr Werkzeuge bereitgestellt werden können, so dass die Werkstücke flexibler bearbeitet werden können.

Weiter ist es bevorzugt, wenn jedes Werkzeugwechselmagazin mit seinem äußeren Ende in der zweiten Richtung aus dem Arbeitsraum herausragt.

Anders als bei der eingangs erwähnten EP 2 777 872 B1 ist das Werkzeugwechselmagazin nicht vollständig innerhalb des Maschinengestells angeordnet, sondern ragt sozusagen seitlich aus dem Maschinengestell hinaus. Dies ermöglicht nicht nur einen kompakten Aufbau der neuen Werkzeugmaschine sondern auch eine größere Anzahl von in dem Werkzeugwechselmagazin gespeicherten Werkzeugen, da die Abmessungen des Werkzeugwechselmagazins nicht durch die Abmessungen des Maschinengestells limitiert sind.

Weiter ist es bevorzugt, wenn oberhalb von zumindest einem der Werkzeugwechselmagazine ein Werkzeugspeichermagazin angeordnet ist, das in der ersten Richtung zwischen dem zugeordneten Portalbalken und dem Werkzeugwechselmagazin liegt.

Hier ist von Vorteil, dass die Zahl der zur Verfügung stehenden Werkzeuge weiter erhöht werden kann, was die Flexibilität der Bearbeitung eines Werkstückes weiter erhöht.

Besonders bevorzugt ist es dabei, wenn das oder jedes Werkzeugspeichermagazin mit seinem inneren Ende gegenüber dem inneren Ende des unter dem Werkzeugspeichermagazin liegenden Werkzeugwechselmagazins in der zweiten Richtung zurückversetzt ist, so dass die übereinander liegenden Magazine eine terrassenförmige Anordnung zeigen.

Hier ist von Vorteil, dass ein einfacher und schneller Zugang für die Werkzeugspindel nicht nur zu dem oberen sondern auch zu dem unteren Werkzeugwechselmagazin geschaffen wird. Der Zugang ist sozusagen permanent verfügbar, es müssen zum Werkzeugwechsel keine Magazine verschoben werden. Die Werkzeugspindel kann dabei auch Werkzeuge zwischen dem Werkzeugwechselmagazin und dem Werkzeugspeichermagazin umsetzen.

Besonders bevorzugt ist es jedoch, wenn zumindest eine Umladevorrichtung vorgesehen ist, um Werkzeuge zwischen dem Werkzeugwechselmagazin und dem darüber angeordneten Werkzeugspeichermagazin umzuladen.

Hier ist von Vorteil, dass die Werkzeugspindel nur das weiter unten gelegene Werkzeugwechselmagazin anfahren muss. Dies bedeutet, dass die Werkzeugspindel nur kurze Hübe in der vertikalen und der horizontalen, also der ersten und der zweiten Richtung durchführen muss, um Werkzeuge zu wechseln und dann das Werkstück wieder anzufahren. Diese "kurzen Z- und Y-Achsen" ermöglichen nicht nur einen sehr steifen und kompakten Aufbau der neuen Werkzeugmaschine, sie erlauben auch eine geringe Spanzu-Span-Zeit, was wiederum eine schnelle Bearbeitung der Werkstücke ermöglicht.

Weiter ist es bevorzugt, wenn für jedes Werkzeugwechselmagazin eine Umladevorrichtung vorgesehen ist.

Hier ist von Vorteil, dass das Umladen von Werkzeugen für beide Werkzeugspindeln zeitgleich erfolgen kann, was weitere Zeitvorteile bei der Bearbeitung mit sich bringt. Allgemein ist es bevorzugt, wenn die oder jede Umladevorrichtung außerhalb des Arbeitsraumes in der zweiten Richtung neben dem Maschinengestell angeordnet ist.

Hier ist von Vorteil, dass der Arbeitsraum von der oder jeder Umladevorrichtung frei ist, so dass der Arbeitsraum insgesamt kompakt aufgebaut sein kann, weil er keinen unnötigen Speicherraum für weitere mechanische Teile bereitstellen muss. Auch dies führt zu einer kompakten und somit steifen Werkzeugmaschine.

Die außerhalb des Arbeitsraumes neben dem Maschinengestell angeordneten Umladevorrichtungen ermöglichen darüber hinaus eine einfache und problemlose Wartung, wobei auch das Be- und Entladen von Werkzeugen schnell und problemlos realisiert werden kann. Die neue Werkzeugmaschine ist somit auch schnell und flexibel auf die Bearbeitung von neuen Werkstücken umzurüsten, für die zumindest einige Werkzeuge aus dem Werkzeugwechselmagazin und/oder Werkzeugspeichermagazin ersetzt werden müssen.

Schließlich ist es noch von Vorteil, wenn jedes Werkzeugwechselmagazin und jedes Werkzeugspeichermagazin eine eigene Verkleidung aufweist, oder jeweils für ein Werkzeugwechselmagazin und das darüber angeordnete Werkzeugspeichermagazin eine gemeinsame Verkleidung vorgesehen ist

Hier ist von Vorteil, dass die außerhalb des Maschinengestells liegenden Bereiche der Magazine geschützt sind, ohne dass die Verkleidung der Werkzeugmaschine selbst ausladend ausgebildet sein muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Seitenansicht der neuen Werkzeugmaschine;
- Fig. 2: eine Schnittdarstellung der neuen Werkzeugmaschine, gesehen längs der Linie II-II aus Fig. 1;
- Fig. 3: eine perspektivische Ansicht der neuen Werkzeugmaschine von schräg oben, wobei die aus Übersichtlichkeitsgründen in den Fig. 1 und 2 weggelassenen Werkzeugwechselmagazine und Werkzeugspeichermagazine gezeigt sind; und
- Fig. 4: in einer Darstellung wie Fig. 3 die neue Werkzeugmaschine mit Verkleidungswänden, die innerhalb des Arbeitsraumes einen Späneraum begrenzen.

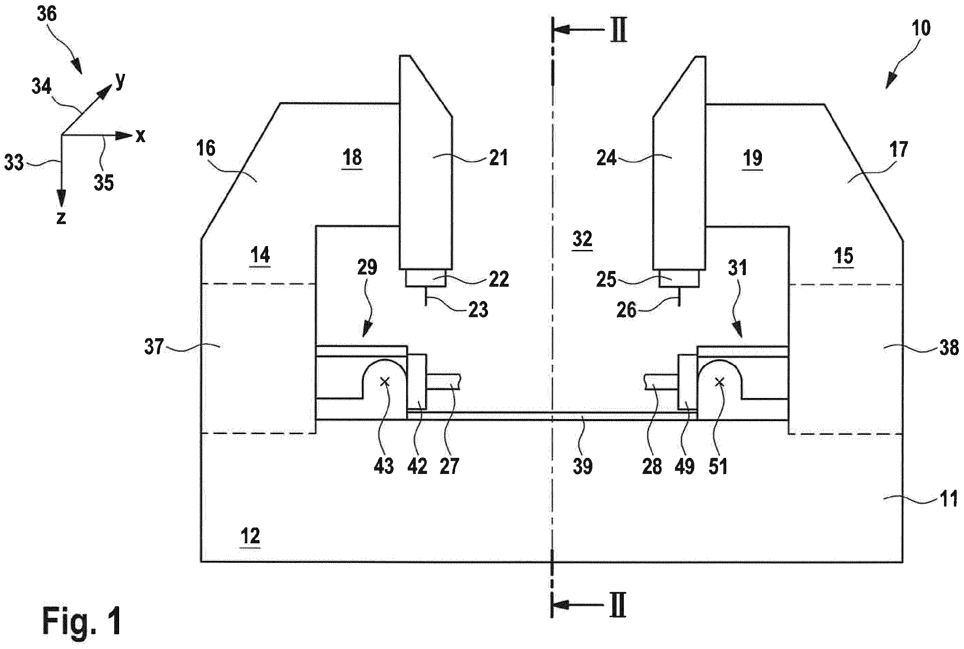

In Fig. 1 ist in nicht maßstabsgetreuer Seitenansicht eine Werkzeugmaschine 10 gezeigt, die ein nach oben offenes, U-förmiges Maschinengestell 11 aufweist. Die einzelnen Komponenten der Werkzeugmaschine 10 sind lediglich schematisch angedeutet, weil nicht die konkrete Realisierung sondern die Anordnung und das Zusammenwirken entscheidend für die Vorteile sind, die mit dem neuen Aufbau der Werkzeugmaschine 10 realisiert werden.

Das Maschinengestell 11 umfasst eine Grundplatte 12, von der senkrecht zwei Stirnwände 14, 15 hochstehen, an deren oberen Enden 16, 17 jeweils ein Portalbalken 18, 19 angeordnet ist. Grundplatte 12, Stirnwände 14, 15 und Portalbalken 18, 19 sind entweder einstückig miteinander ausgebildet oder werden als gesonderte Bauteile gefertigt und nachträglich fest miteinander verbunden, beispielsweise miteinander verklebt.

An dem Portalbalken 18 ist ein Spindelkopf 21 gelagert, der eine drehbare, also um eine Spindelachse rotierbare Werkzeugspindel 22 trägt, in die ein Werkzeug 23 eingespannt ist. Gleichfalls ist an dem Portalbalken 19 ein Spindelkopf 24 angeordnet, der eine um eine Spindelachse rotierbare Werkzeugspindel 25 trägt, in die ein Werkzeug 26 eingespannt ist.

Die Werkzeuge 23 und 26 dienen zur Bearbeitung von Werkstücken 27 und 28, die in schematisch dargestellten Vorrichtungen 29 und 31 eingespannt sind, die die Werkstücke 27 und 28 in an sich bekannter Weise zur Positionierung um ihre Längsachsen drehen und/oder für eine Drehbearbeitung in Rotation versetzen können.

Die Werkzeugspindeln 22 und 25 sowie die Vorrichtungen 29 und 31 sind in einem gemeinsamen Arbeitsraum 32 angeordnet, der durch das Maschinengestell 11 umfasst ist. In dem Arbeitsraum 32 werden die Werkzeuge 23, 26 und die Werkstücke 27, 28 bewegt, um so die Werkstücke 27, 28 bearbeiten und zwischen den Vorrichtungen 29, 31 übergeben sowie die Werkzeuge 23, 26 wechseln zu können.

Die Werkzeugspindeln 22 und 25 sind dazu über die Spindelköpfe 21 bzw. 24 an den parallel zueinander verlaufenden Portalbalken 18, 19 in einer ersten Richtung 33 verfahrbar, die sich vertikal erstreckt und allgemein als Z-Achse bezeichnet wird.

Darüber hinaus sind die Werkzeugspindeln 22 und 25 über die Spindelköpfe 21, 24 an den Portalbalken 18, 19 in einer zu der ersten Richtung 33 orthogonalen zweiten, horizontalen Richtung 34 verfahrbar, die allgemein als Y-Achse bezeichnet wird und senkrecht in die Ebene der Zeichnung der Fig. 1 hinein verläuft.

Die beiden Werkzeugspindeln 22, 25 sind in einer zu der ersten und zweiten Richtung 33, 34 orthogonalen dritten Richtung 35 zueinander beabstandet, die allgemein als X-Achse bezeichnet wird und horizontal verläuft.

Die Spindelköpfe 21 und 24 stehen sich in der Richtung 35 "Kopf an Kopf" gegenüber.

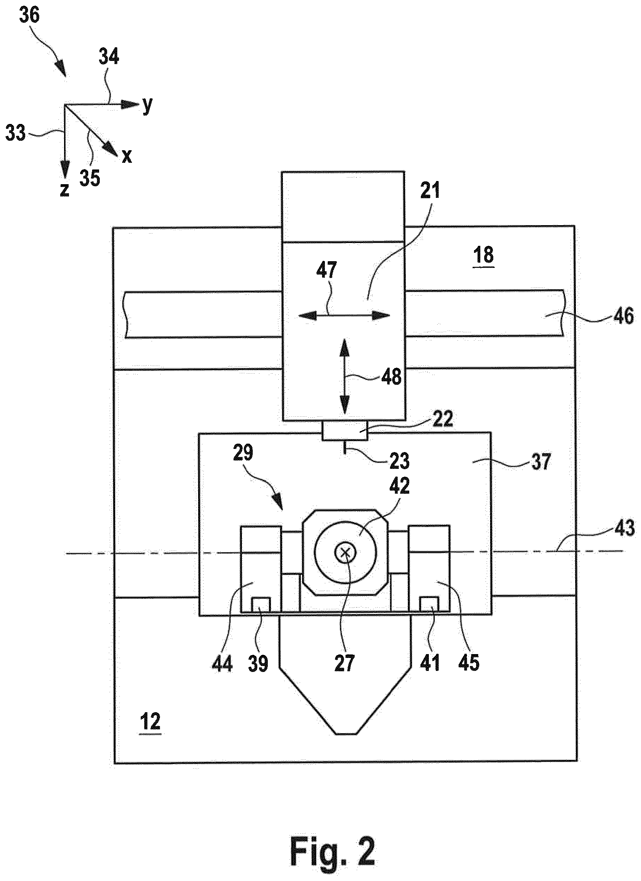

Oben links in Fig. 1 ist noch ein Koordinatenkreuz 36 gezeigt, das die Lage der Richtungen 33, 34 und 35 verdeutlicht. Das Koordinatenkreuz 36 ist auch in den Fig. 2 bis 4 dargestellt.

In der Stirnwand 14 ist einen Öffnung 37 und in der Stirnwand 15 eine Öffnung 38 vorgesehen. Die Öffnung 37 dient der Zufuhr eines unbearbeiteten Werkstückes 27, während die Öffnung 38 dem Abtransport eines fertig bearbeiteten Werkstückes 28 dient.

Die Art und Weise der Zufuhr und des Abtransportes von Werkstücken 27, 28 erfolgt auf übliche Weise und ist für die vorliegende Anmeldung nicht von Belang.

Es sei noch erwähnt, dass die beiden Vorrichtungen 29 und 31 in der dritten Richtung 35 verfahrbar sind, wozu auf der Grundplatte 12 Führungen 39 und 41 angeordnet sind, von denen in Fig. 1 nur die Führung 39 zu erkennen ist.

Fig. 2 zeigt eine Schnittdarstellung der Werkzeugmaschine 10 aus Fig. 1 gesehen längs der Linie II-II aus Fig. 1.

In Fig. 2 sind zunächst die beiden Führungen 39, 41 für die Vorrichtung 29 zu erkennen, mit denen diese in der dritten Richtung 35 verfahren werden kann. Auf den Führungen 39, 41 fährt auch die Vorrichtung 31.

Die Vorrichtung 29 weist eine Spindel 42 auf, mit der das Werkstück 27 um seine Längsachse gedreht oder rotiert werden kann. Die Spindel 42 ist um eine Schwenkachse 43 schwenkbar an zwei Wangen 44, 45 gelagert, über die die gesamte Vorrichtung 29 längs der Führungen 39, 41 in der dritten Richtung 35 verfahrbar ist. Die Schwenkachse 43 ist parallel zu der zweiten Richtung 34 ausgerichtet.

In Fig. 2 ist noch zu erkennen, dass sich der Portalbalken 18 in der zweiten Richtung 34 erstreckt und eine Führung 46 aufweist, an der der Spindelkopf 21 in der zweiten Richtung 34 verfahren werden kann.

Wie bereits erwähnt, ist der Spindelkopf 21 auch in der ersten Richtung 33 verfahrbar. Pfeile 47 und 48 deuten die Verfahrbarkeit des Spindelkopfes 21 in der zweiten Richtung 34 sowie der ersten Richtung 33 an.

Es versteht sich, dass der Spindelkopf 24 an dem Portalbalken 19 genauso verfahrbar gelagert ist, wie der Spindelkopf 21 an dem Portalbalken 18.

Ferner ist die Vorrichtung 31 genauso aufgebaut und verfahrbar und schwenkbar wie die Vorrichtung 29. Beide Vorrichtungen 29, 31 laufen also auf den Führungen 39, 41, so dass zwischen ihnen teilbearbeitete Werkstücke 27 übergeben werden können.

In Fig. 1 ist mit 49 noch die Spindel der Vorrichtung 31 gezeigt, mit der das Werkstück 28 gedreht und in Rotation versetzt werden kann. Ferner ist bei 51 in Fig. 1 die Schwenkachse der Vorrichtung 31 gezeigt.

Ein durch die Öffnung 37 in den Arbeitsraum 32 eingebrachtes und in die Spindel 42 der Vorrichtung 29 eingespanntes Werkstück wird mit dem Werkzeug 23, das in die Werkzeugspindel 22 eingespannt ist, so weit bearbeitet, bis sämtliche aus der Spindel 42 herausragenden Seiten und Flächen bearbeitet sind. Dazu wird die Vorrichtung 29 in der dritten Richtung 35 verfahren und ihre Spindel 42 ggf. um die Schwenkachse 43 geschwenkt.

Wenn die Teilbearbeitung des Werkstückes 27 abgeschlossen ist, fährt die Vorrichtung 29 in Richtung der Vorrichtung 31 und/oder die Vorrichtung 31 in Richtung der Vorrichtung 29, woraufhin das Werkstück 27 in die Spindel 49 eingespannt wird, und dort als teilbearbeitetes Werkstück 28 zur weiteren Bearbeitung zur Verfügung steht.

Durch Verfahren der Vorrichtung 39 in der dritten Richtung 35 und/oder Verschwenken der Spindel 49 um die Schwenkachse 43 wird das teilbearbeitete Werkstück 28 jetzt dem Werkzeug 26 in der Werkzeugspindel 25 so präsentiert, dass alle noch nicht bearbeitenden Seiten und Flächen fertig bearbeitet werden können.

Wenn das Werkstück 28 fertig bearbeitet ist, schwenkt die Spindel 49 um die Schwenkachse 51 um etwa 180°, so dass das Werkstück 28 durch die Öffnung 38 auf geeignete Weise entnommen oder entladen werden kann.

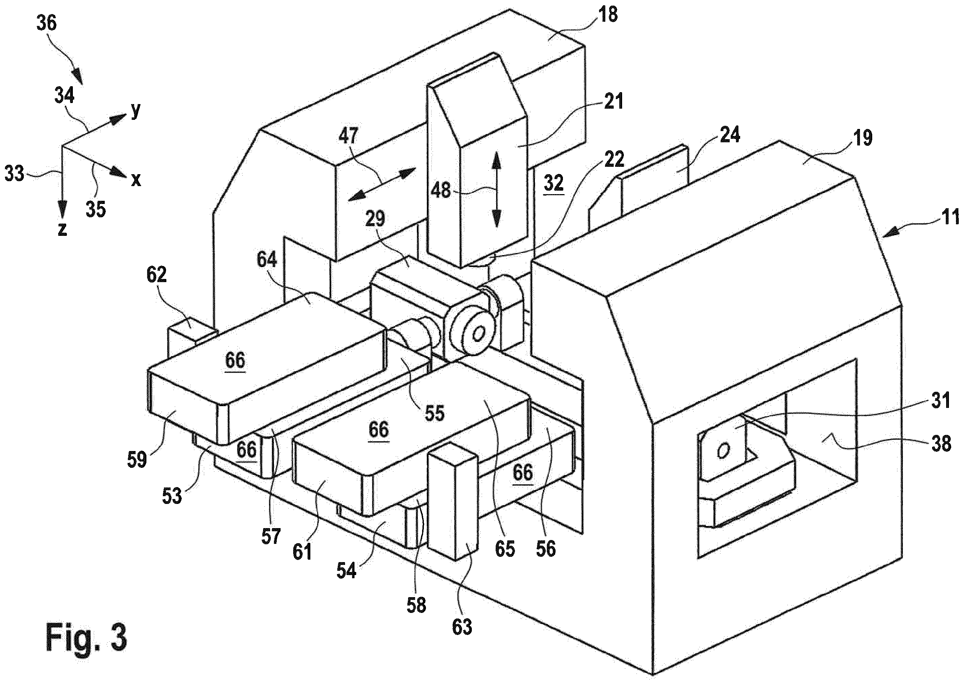

Da die Werkstücke 28, 27 eine komplexe Bearbeitung erfordern, reichen zwei Werkzeuge 23, 26 für die Bearbeitung nicht aus, weshalb Werkzeugmagazine vorgesehen sind, wie dies jetzt im Zusammenhang mit der Fig. 3 beschrieben wird.

Die Fig. 3 zeigt die Werkzeugmaschine 10 aus den Fig. 1 und 2 in einer perspektivischen Ansicht von oben, wobei gleiche Bezugszeichen identische Konstruktionsmerkmale bezeichnen.

In Fig. 3 ist zu erkennen, dass jedem Spindelkopf 21, 24 ein Werkzeugwechselmagazin 53, 54 zugeordnet ist, das mit seinem inneren Ende 55, 56 permanent in dem Arbeitsraum 32 angeordnet ist, während es mit seinem äußeren Ende 57, 58 in der zweiten Richtung 34 neben dem Maschinengestell 11 angeordnet ist, also seitlich aus dem Arbeitsraum 32 herausragt.

In jedem Werkzeugwechselmagazin 53, 54 sind in an sich bekannter Weise mehrere Werkzeuge 23, 26 in sogenannten Magazinplätzen vorrätig gehalten, die innerhalb eines Werkzeugwechselmagazins 53, 54 so bewegt werden können, dass sie an dem inneren Ende 55, 56 zum Werkzeugwechsel zur Verfügung stehen.

Durch Verfahren der Spindelköpfe 21, 24 in der zweiten Richtung 34 sowie der ersten Richtung 33, was wieder durch die Pfeile 47, 48 angedeutet ist, kann die jeweilige Werkzeugspindel 22, 25 das innere Ende 55, 56 der Werkzeugwechselmagazine 53 bzw. 54 anfahren und dort Werkzeuge 23, 26 im Pick-up-Verfahren in freie Magazinplätze ablegen und aus bestückten Magazinplätzen neue Werkzeuge 23, 26 aufnehmen.

Je nach Bedarf an zu speichernden Werkzeugen 23, 26 und deren Dimensionen können die Werkzeugwechselmagazine 53, 54 verschiedene Abmessungen aufweisen.

Wenn die Zahl der Werkzeuge jedoch sehr groß wird, wird oberhalb von jedem Werkzeugwechselmagazin 53, 54 ein Werkzeugspeichermagazin 59, 61 angeordnet, das in der ersten Richtung 33 zwischen dem jeweiligen Werkzeugwechselmagazin 53, 54 und Portalbalken 18, 19 angeordnet ist.

In dem Werkzeugspeichermagazin 59, 61 sind weitere Werkzeuge vorgesehen, die jedoch nicht unmittelbar in die Werkzeugspindeln 22, 25 eingewechselt werden können, sondern dazu in das Werkzeugwechselmagazin 53 bzw. 54 umgeladen werden müssen.

Diese Umladung erfolgt mit Umladevorrichtungen 62, 63, die außerhalb des Arbeitsraumes 32 in der zweiten Richtung 34 neben dem Maschinengestell 11 so angeordnet sind, dass sie Werkzeuge 23, 26 zwischen den Werkzeugspeichermagazinen 59, 61 und dem Werkzeugwechselmagazin 53, 54 umladen können.

Jedes Werkzeugspeichermagazin 59, 61 weist ein inneres Ende 64, 65 auf, das gegenüber dem inneren Ende 55, 56 des jeweils unter ihm liegenden Werkzeugwechselmagazins 53, 54 in der zweiten Richtung 34 zurückversetzt ist, so dass die Magazine 53 und 59 sowie 54 und 61 jeweils terrassenförmig angeordnet sind. Auf diese Weise kann das unter den Werkzeugspeichermagazinen 59, 61 jeweils liegende Werkzeugwechselmagazin 53, 54 an seinem inneren Ende 55 bzw. 56 von den Werkzeugspindeln 22, 25 zum Werkzeugwechsel im Pick-up-Verfahren angefahren werden.

Es sei noch erwähnt, dass jedes Werkzeugwechselmagazin 55, 54 und jedes Werkzeugspeichermagazin 59, 61 eine eigene Verkleidung aufweisen kann, was für alle vier Magazine 53, 54, 59, 61 mit dem Bezugszeichen 66 gekennzeichnet ist. Es ist aber auch möglich, für das Werkzeugspeichermagazin 59 und das Werkzeugwechselmagazin 55 sowie für das Werkzeugspeichermagazin 61 und das Werkzeugwechselmagazin 54 jeweils eine gemeinsame Verkleidung vorzusehen. Die Verkleidungen dienen dem Schutz des Bedienungspersonals und sollen tropfendes Kühlmittel auffangen.

Weil die Werkzeugspeichermagazine 59, 61 oberhalb der Werkzeugwechselmagazine 53, 54 angeordnet sind, und der Werkzeugwechsel lediglich an den unteren Werkzeugwechselmagazinen 53, 54 erfolgt, ist der Hub in der ersten und der zweiten Richtung 33, 34, den ein Spindelkopf 21, 24 ausüben muss, um außer Eingriff mit dem gerade bearbeiteten Werkstück 27, 28 zu gelangen und die Werkzeugwechselposition anzufahren, sehr gering, so dass die Werkzeugmaschine 10 nur eine kurze Z- und eine kurze Y-Achsenmechanik benötigt, die den jeweiligen Spindelkopf 21, 24 in Richtung der ersten bzw. zweiten Richtung 33 bzw. 34 verfährt.

Durch die Anordnung der vier Magazine 53, 54, 59, 61 quer zu der dritten Richtung 35 ergibt sich insgesamt eine sehr kompakte Werkzeugmaschine, die aufgrund der PortalBauweise extrem steif ist, wobei die Steifigkeit durch die kurzen Abmessungen in allen drei Richtungen 33, 34, 35 noch erhöht wird.

Die Spindelköpfe 21, 24 bewegen sich lediglich in der ersten Richtung 33 und der zweiten Richtung 34, während die Relativbewegung zwischen Werkzeug 23, 26 und Werkstück 27, 28 in der dritten Richtung 35 durch die Vorrichtungen 29, 31 realisiert wird.

Dies bedeutet, dass die Spindelköpfe 21, 24 nicht dazu neigen, Kippbewegungen auszuführen, weil sie nicht auch in der dritten Richtung 35 verfahren werden. Auch dies trägt zur Steifigkeit der neuen Werkzeugmaschine 10 bei.

Ferner ist für die Werkzeugspindeln keine X-Achsenmechanik mit eigenem Antrieb erforderlich, was zu einer Reduzierung der bewegten Massen führt. Dies ermöglicht eine höhere Dynamik.

Wegen der großen Steifigkeit und der hohen Dynamik der neuen Werkzeugmaschine 10 sind schnelle Verfahrbewegungen sowohl der Spindelköpfe 21, 24 als auch der Vorrichtungen 29, 31 möglich, ohne dass dies zu Genauigkeitsproblemen oder Problemen bei der Reproduzierbarkeit der Bearbeitung führt.

Im Umkehrschluss bedeutet dies, dass die Werkstücke 27, 28 mit der neuen Werkzeugmaschine 10 sehr schnell bearbeitet und Werkzeuge 23, 26 sehr schnell gewechselt werden können.

Wegen der kurzen Wege zwischen den Vorrichtungen 29, 31 können die teilbearbeiteten Werkstücke 27 auch sehr schnell in die zweite Vorrichtung 31 übergeben werden, so dass insgesamt die für die Gesamtbearbeitung eines Werkstückes 27, 28 benötigte Zeit sehr gering ist, so dass die gesamte Bearbeitungszeit für ein Werkstück 27, 28 sehr kurz ist.

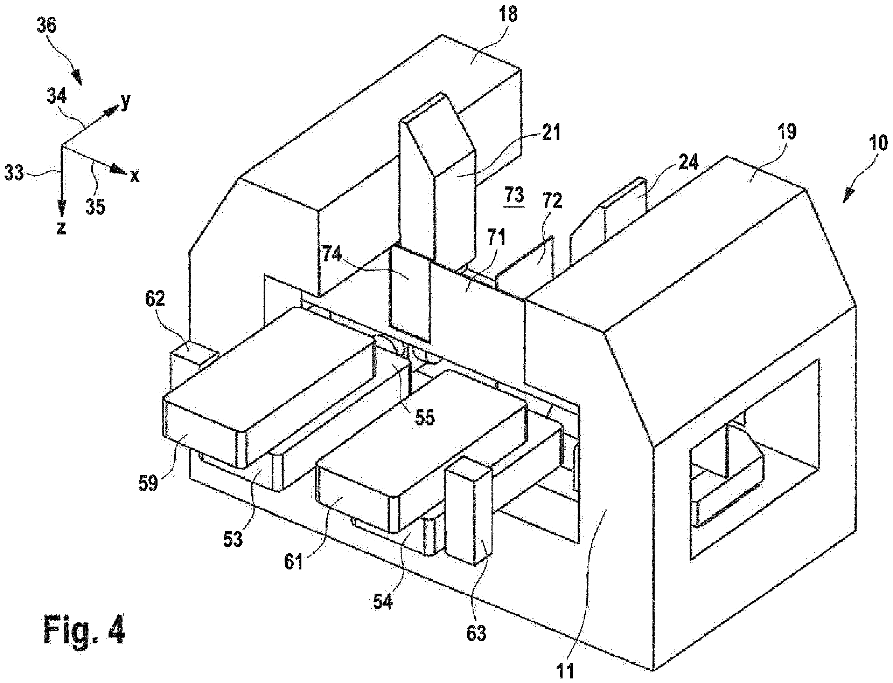

Um die Umgebung und Bedienungspersonal vor herumfliegenden Spänen und spritzendem Kühlmittel zu schützen, kann - wie in Fig. 4 dargestellt - innerhalb des gemeinsamen Arbeitsraumes 32 durch schematisch angedeutete Verkleidungswände 71 ein Späneraum 73 abgetrennt sein, in dem die Bearbeitung der Werkstücke 27, 28 mit den Werkzeugen 23, 26 erfolgt.

Parallel zu der Verkleidungswand 71 ist der Späneraum 73 auf seiner von den Magazinen 53, 54, 59, 61 abgelegenen Seite ebenfalls durch eine Verkleidungswand 71 abgetrennt, die in Fig. 4 nicht dargestellt ist.

Diese Verkleidungswände 71 erstrecken sich in der ersten und der dritten Richtung 33, 35.

Die in Fig. 4 vordere Verkleidungswand 71 weist eine Tür 74 auf, durch die der Spindelkopf 21 aus dem Späneraum 73 herausgefahren werden kann, so dass ein Werkzeugwechsel an dem inneren Ende des Werkzeugwechselmagazins 53 möglich ist. In der Verkleidung 66 des Werkzeugwechselmagazins 53 kann dazu eine ggf. durch eine Klappe verschließbare Öffnung vorgesehen sein, durch die ein Zugriff auf die - leeren bzw. mit Werkzeugen 23, 26 bestückten - Magazinplätze im Inneren des Werkzeugwechselmagazins 53 möglich ist.

Für den Spindelkopf 24 ist eine - in Fig. 4 jedoch nicht zu erkennende - entsprechende Tür in der Verkleidungswand 71 vorgesehen.

Zwischen den Spindelköpfen 21, 24 ist in dem Späneraum 73 eine weitere Verkleidungswand 72 angedeutet, die sich in der ersten und zweiten Richtung 33, 34 erstreckt. Durch die Verkleidungswand 72 wird verhindert, dass bei der Bearbeitung mit einem der beiden Spindelköpfe 21, 24 entstehende Späne und eingesetztes Kühlmittel in den Arbeitsbereich des anderen Spindelkopfes 24, 21 gelangen.

Auch in der Verkleidungswand 72 ist eine - in Fig. 4 nicht zu erkennende - Tür vorgesehen, die geöffnet wird, wenn eine oder beide der Vorrichtungen 29, 31 in der dritten Richtung 35 verfahren, um Werkstücke 27, 28 zu übergeben bzw. zu übernehmen.

Alternativ können die Verkleidungswände 71 in der zweiten Richtung 34 auch so weit auseinander liegen, dass der Späneraum 73 zumindest in der zweiten Richtung 34 dem Arbeitsraum 32 entspricht. Zumindest die - unteren - Werkzeugwechselmagazine 53, 54 ragen dann mit ihren inneren Enden 55, 56 durch die Verkleidungswände 71 hindurch in den Arbeitsraum 32 hin, so dass dort der Werkzeugwechsel im Pick-up erfolgen kann.

Zum Schutz der Mechanik des Werkzeugwechselmagazins 53, 54 und der gespeicherten Werkzeuge 23, 26 vor Spänen und Kühlmittel kann in der Verkleidung 66 wieder eine Zugangsöffnung vorgesehen sein, die von einer Klappe freigegeben wird, wenn ein Werkzeugwechsel erfolgen soll.

## Patentansprüche

1. Werkzeugmaschine mit zwei vertikal ausgerichteten, zur Aufnahme von Werkzeugen (23, 26) ausgerüsteten Werkzeugspindeln (22, 25), die in einer ersten Richtung (33) vertikal und in einer zu der ersten Richtung (33) orthogonalen zweiten Richtung (34) horizontal verfahrbar sind, und mit zwei Vorrichtungen (29, 31) zum Einspannen von zu bearbeitenden Werkstücken (27, 28), wobei beide Vorrichtungen (29, 31) in einer dritten, zu der ersten und der zweiten Richtung (33, 34) orthogonalen Richtung (35) horizontal verfahrbar sind, wobei die beiden Werkzeugspindeln (22, 25) und die beiden Vorrichtungen (29, 31) an einem gemeinsamen Maschinengestell (11) mit einem gemeinsamen Arbeitsraum (32) gelagert sind, **dadurch gekennzeichnet, dass** das Maschinengestell (11) eine Grundplatte (12) und zwei Stirnwände (14, 15) aufweist, an deren oberen Enden (16, 17) jeweils ein Portalbalken (18, 19) ausgebildet ist, die Portalbalken (18, 19) sich in der zweiten Richtung (34) erstrecken und zueinander parallel verlaufen, an den Portalbalken (18, 19) jeweils eine der Werkzeugspindeln (22, 25) in der ersten und der zweiten Richtung (33,34) verfahrbar gelagert ist, die beiden Werkzeugspindeln (22, 25) in der zweiten Richtung (34) parallel zueinander verfahrbar sind und aufeinander zu weisen, und zumindest ein stationär angeordnetes Werkzeugwechselmagazin (53, 54) für einen Werkzeugwechsel im pick-up Verfahren vorgesehen ist, das zumindest mit seinem inneren Ende (55, 56) permanent in dem Arbeitsraum (32) angeordnet ist.

2. Werkzeugmaschine nach Anspruch 1, **dadurch gekennzeichnet**, auf der Grundplatte (12) eine sich in der dritten Richtung (35) erstreckende Führung (39, 41) angeordnet ist, an der die beiden Vorrichtungen (29, 31) gelagert sind.

3. Werkzeugmaschine nach Anspruch 1 oder 2, **dadurch gekennzeichnet, dass** zumindest eine der beiden Vorrichtungen (29, 31) eine Schwenkachse (43, 51) aufweist, die sich vorzugsweise in der zweiten Richtung (34) erstreckt.

4. Werkzeugmaschine nach einem der Ansprüche 1 bis 3, **dadurch gekennzeichnet, dass** für jede Werkzeugspindel (22, 25) ein Werkzeugwechselmagazin (53, 54) vorgesehen ist.

5. Werkzeugmaschine nach Anspruch 4, **dadurch gekennzeichnet, dass** jedes Werkzeugwechselmagazin (53, 54) mit seinem äußeren Ende (57, 58) in der zweiten Richtung (34) aus dem Arbeitsraum (32) herausragt.

6. Werkzeugmaschine nach einem der Ansprüche 1 bis 5, **dadurch gekennzeichnet, dass** oberhalb von zumindest einem der Werkzeugwechselmagazine (53, 54) ein Werkzeugspeichermagazin (59, 61) angeordnet ist, das in der ersten Richtung (33) zwischen dem zugeordneten Portalbalken (18, 19) und dem Werkzeugwechselmagazin (53, 54) liegt.

7. Werkzeugmaschine nach Anspruch 6, **dadurch gekennzeichnet, dass** das oder jedes Werkzeugspeichermagazin (59, 61) mit seinem inneren Ende (64, 65) gegenüber dem inneren Ende (55, 56) des unter dem Werkzeugspeichermagazin (64, 65) liegenden Werkzeugwechselmagazins (53, 54) in der zweiten Richtung (34) zurückversetzt ist.

8. Werkzeugmaschine nach Anspruch 6 oder 7, **dadurch gekennzeichnet, dass** zumindest eine Umladevorrichtung (62, 63) vorgesehen ist, um Werkzeuge (23, 26) zwischen dem Werkzeugwechselmagazin (53, 54) und dem darüber angeordneten Werkzeugspeichermagazin (59, 61) umzuladen.

9. Werkzeugmaschine nach Anspruch 8, **dadurch gekennzeichnet, dass** für jedes Werkzeugwechselmagazin (53, 54) eine Umladevorrichtung (62, 63) vorgesehen ist.

10. Werkzeugmaschine nach Anspruch 8 oder 9, **dadurch gekennzeichnet, dass** die oder jede Umladevorrichtung (62, 63) außerhalb des Arbeitsraumes (32) in der zweiten Richtung (34) neben dem Maschinengestell (11) angeordnet ist.

11. Werkzeugmaschine nach einem der Ansprüche 1 bis 10, **dadurch gekennzeichnet, dass** jedes Werkzeugwechselmagazin (53, 54) und jedes Werkzeugspeichermagazin (59, 61) eine eigene Verkleidung (66) aufweist.

12. Werkzeugmaschine nach einem der Ansprüche 6 bis 10, **dadurch gekennzeichnet, dass** jeweils für ein Werkzeugwechselmagazin (53, 54) und das darüber angeordnete Werkzeugspeichermagazin (59, 61) eine gemeinsame Verkleidung vorgesehen ist.

## Claims

1. A machine tool comprising two vertically oriented tool spindles (22, 25) that are equipped to receive tools (23, 26) and are movable vertically in a first direction (33) and horizontally in a second direction (34) that is orthogonal to the first direction (33), and comprising two devices (29, 31) for clamping workpieces (27, 28) to be machined, wherein the two devices (29, 31) are movable horizontally in a third direction (35) orthogonal to the first and the second direction (33, 34), wherein the two tool spindles (22, 25) and the two devices (29, 31) are mounted on a common machine frame (11) having a common working space (32), **characterized in that** the machine frame (11) comprises a base plate (12) and two end walls (14, 15), at each of the upper ends (16, 17) of which a gantry beam (18, 19) is formed, the gantry beams (18, 19) extend in the second direction (34) and parallel to one another, on each of said gantry beams (18, 19) one of the tool spindles (22, 25) is mounted so as to be movable in the first and the second direction (33, 34), the two tool spindles (22, 25) are movable parallel to one another in the second direction (34) and face one another, and at least one tool change magazine (53, 54), which is arranged in a stationary manner, is provided for changing tools in accordance with the pickup method, said tool change magazine (53, 54) being arranged at least with its inner end (55, 56) permanently in the working space (32).

2. The machine tool as claimed in claim 1, **characterized in that** a guide (39, 41) that extends in the third direction (35) is arranged on the base plate (12), the two devices (29, 31) being mounted on said guide (39, 41).

3. The machine tool as claimed in claim 1 or 2, **characterized in that** at least one of the two devices (29, 31) comprises a pivot axis (43, 51) that extends preferably in the second direction (34).

4. The machine tool as claimed in one of claims 1 to 3, **characterized in that** a tool change magazine (53, 54) is provided for each tool spindle (22, 25).

5. The machine tool as claimed in claim 4, **characterized in that** each tool change magazine (53, 54) projects with its outer end (57, 58) out of the working space (32) in the second direction (34).

6. The machine tool as claimed in one of claims 1 to 5, **characterized in that** a tool storage magazine (59, 61) is arranged above at least one of the tool change magazines (53, 54), said tool storage magazine (59, 61) being located between the associated gantry beam (18, 19) and the tool change magazine (53, 54) in the first direction (33).

7. The machine tool as claimed in claim 6, **characterized in that** the or each tool storage magazine (59, 61) is set back in the second direction (34) with its inner end (64, 65) with respect to the inner end (55, 56) of the tool change magazine (53, 54) located beneath the tool storage magazine (64, 65).

8. The machine tool as claimed in claim 6 or 7, **characterized in that** at least one transfer device (62, 63) is provided, in order to transfer tools (23, 26) between the tool change magazine (53, 54) and the tool storage magazine (59, 61) that is arranged above it.

9. The machine tool as claimed in claim 8, **characterized in that** a transfer device (62, 63) is provided for each tool change magazine (53, 54).

10. The machine tool as claimed in claim 8 or 9, **characterized in that** the or each transfer device (62, 63) is arranged outside the working space (32), next to the machine frame (11) in the second direction (34).

11. The machine tool as claimed in one of claims 1 to 10, **characterized in that** each tool change magazine (53, 54) and each tool storage magazine (59, 61) has its own casing (66).

12. The machine tool as claimed in one of claims 6 to 10, **characterized in that** a common casing is respectively provided for a tool change magazine (53, 54) and the tool storage magazine (59, 61) that is arranged above it.

## Revendications

1. Machine-outil pourvue de deux broches d'outil (22, 25) orientées verticalement, équipées pour la réception d'outils (23, 26), qui peuvent être déplacées verticalement dans une première direction (33) et horizontalement dans une deuxième direction (34) orthogonale à la première direction (33), et pourvue de deux dispositifs (29, 31) pour le maintien par serrage de pièces à usiner (27, 28), les deux dispositifs (29, 31) pouvant être déplacés horizontalement dans une troisième direction (35) orthogonale à la première et à la deuxième direction (33, 34), les deux broches d'outil (22, 25) et les deux dispositifs (29, 31) étant montés sur un châssis de machine commun (11) avec un espace de travail commun (32), **caractérisée en ce que** le châssis de machine (11) comprend une plaque de base (12) et deux parois frontales (14, 15), aux extrémités supérieures (16, 17) desquelles une barre de portique (18, 19) est à chaque fois formée, les barres de portique (18, 19) s'étendent dans la deuxième direction (34) et sont parallèles l'une à l'autre, une des broches d'outil (22, 25) est à chaque fois montée de manière déplaçable dans la première et la deuxième direction (33, 34) sur les barres de portique (18, 19), les deux broches d'outil (22, 25) peuvent être déplacées parallèlement l'une à l'autre dans la deuxième direction (34) et se font face, et au moins un magasin d'échange d'outil (53, 54) agencé de manière stationnaire pour un échange d'outil dans le procédé de ramassage est prévu, qui est agencé de manière permanente dans l'espace de travail (32) au moins avec son extrémité intérieure (55, 56).

2. Machine-outil selon la revendication 1, **caractérisée en ce qu'**un guide (39, 41) s'étendant dans la troisième direction (35) est agencé sur la plaque de base (12), sur lequel les deux dispositifs (29, 31) sont montés.

3. Machine-outil selon la revendication 1 ou 2, **caractérisée en ce qu'**au moins un des deux dispositifs (29, 31) présente un axe de pivotement (43, 51), qui s'étend de préférence dans la deuxième direction (34).

4. Machine-outil selon l'une quelconque des revendications 1 à 3, **caractérisée en ce qu'**un magasin d'échange d'outil (53, 54) est prévu pour chaque broche d'outil (22, 25).

5. Machine-outil selon la revendication 4, **caractérisée en ce que** chaque magasin d'échange d'outil (53, 54) dépasse hors de l'espace de travail (32) dans la deuxième direction (34) avec son extrémité extérieure (57, 58).

6. Machine-outil selon l'une quelconque des revendications 1 à 5, **caractérisée en ce qu'**un magasin de stockage d'outil (59, 61) est agencé au-dessus d'au moins un des magasins d'échange d'outil (53, 54), qui se situe entre la barre de portique associée (18, 19) et le magasin d'échange d'outil (53, 54) dans la première direction (33).

7. Machine-outil selon la revendication 6, **caractérisée en ce que** le ou chaque magasin de stockage d'outil (59, 61) est en retrait dans la deuxième direction (34) avec son extrémité intérieure (64, 65) par rapport à l'extrémité intérieure (55, 56) du magasin d'échange d'outil (53, 54) situé en dessous du magasin de stockage d'outil (64, 65).

8. Machine-outil selon la revendication 6 ou 7, **caractérisée en ce qu'**au moins un dispositif de transfert (62, 63) est prévu, afin de transférer des outils (23, 26) entre le magasin d'échange d'outil (53, 54) et le magasin de stockage d'outil (59, 61) agencé au-dessus de celui-ci.

9. Machine-outil selon la revendication 8, **caractérisée en ce qu'**un dispositif de transfert (62, 63) est prévu pour chaque magasin d'échange d'outil (53, 54).

10. Machine-outil selon la revendication 8 ou 9, **caractérisée en ce que** le ou chaque dispositif de transfert (62, 63) est agencé à l'extérieur de l'espace de travail (32) dans la deuxième direction (34) à côté du châssis de machine (11).

11. Machine-outil selon l'une quelconque des revendications 1 à 10, **caractérisée en ce que** chaque magasin d'échange d'outil (53, 54) et chaque magasin de stockage d'outil (59, 61) présentent un habillage propre (66).

12. Machine-outil selon l'une quelconque des revendications 6 à 10, **caractérisée en ce qu'**un habillage commun est prévu à chaque fois pour un magasin d'échange d'outil (53, 54) et le magasin de stockage d'outil (59, 61) agencé au-dessus de celui-ci.
